Europäisches Patentamt

European Patent Office

Office européen des brevets

(11) Veröffentlichungsnummer : **0 184 011**
**B1**

(12) ## EUROPÄISCHE PATENTSCHRIFT

(45) Veröffentlichungstag der Patentschrift :
06.07.88

(51) Int. Cl.⁴ : **G 01 F 1/68**, **F 02 D 41/18**

(21) Anmeldenummer : **85114106.9**

(22) Anmeldetag : **06.11.85**

(54) Vorrichtung zur Luftmengenmessung.

(30) Priorität : 05.12.84 DE 3444347

(43) Veröffentlichungstag der Anmeldung :
11.06.86 Patentblatt 86/24

(45) Bekanntmachung des Hinweises auf die Patenterteilung : 06.07.88 Patentblatt 88/27

(84) Benannte Vertragsstaaten :
DE FR GB IT

(56) Entgegenhaltungen :
DE-A- 2 751 196
DE-A- 2 904 154
DE-A- 3 248 603

(73) Patentinhaber : **ROBERT BOSCH GMBH**
**Postfach 50**
**D-7000 Stuttgart 1 (DE)**

(72) Erfinder : **Handtmann, Dieter, Dr. Dipl.-Phys.**
**Wilhelm-Haspel-Strasse 49**
**D-7032 Sindelfingen (DE)**
Erfinder : **Kuhn, Ulrich, Dr. Dipl.-Phys.**
**Birkenweg 5**
**D-7253 Renningen-Malmsheim (DE)**

EP 0 184 011 B1

**Beschreibung**

## Stand der Technik

Die Erfindung geht aus von einer Vorrichtung zur Luftmengenmessung gemäß der Gattung des Anspruchs 1. Aus der DE-A-29 04 154 ist bereits eine derartige Vorrichtung zur Luftmengenmessung bekannt. Dort ist eine Vorrichtung mit mindestens zwei auf einem Träger aufgebrachten Schichten, von denen mindestens eine Schicht als Heizwiderstand für den Träger dient, offenbart. Die zweite Schicht dient als Meßwiderstand eines auf Konstanttemperatur-Betrieb ausgelegten Anemometers. Für den Heizwiderstand ist eine getrennte Regeleinrichtung zur Regelung der Temperatur des Heizwiderstandes vorgesehen, derart, daß der Träger durch den Heizwiderstand auf die Temperatur der weiteren Schicht aufheizbar ist. Die Vorteile dieser bekannten Vorrichtung beruhen darauf, daß dem eigentlichen Meßwiderstand ein Heizwiderstand zur Schutzheizung zugeordnezt wird und somit ein rasches und präzises Ansprechen der Vorrichtung auf Luftmengendurchflußänderungen gegeben ist.

Allerdings zeichnet sich diese bekannte Vorrichtung durch einen hohen Schaltungsaufwand, d. h. durch den Einsatz von zwei verschiedenen Regelkreisen aus. Darüber hinaus ist eine Anpassung der Regelzeitkonstanten der beiden Regelkreise problematisch, so daß in der Praxis verschiedene Zeitkonstanten bei der Erwärmung beider Widerstände und somit nicht zu vernachlässigende Wärmeströmungen auftreten. Wie Untersuchungen gezeigt haben, erweist sich die geometrische Anordnung des Heizwiderstandes in bezug zum Meßwiderstand auf dem Substrat als nicht optimal.

Der Erfindung liegt die Aufgabe zugrunde, eine Vorrichtung zur Durchflußmessung zu schaffen, die einerseits einen einfachen elektronischen Aufbau aufweist und andererseits den Anforderungen an die Meßgenauigkeit und Ansprechzeit gerecht wird. Eine weitere Aufgabe besteht darin, die bekannte Vorrichtung derart weiterzubilden, daß eine vereinfachte und kostengünstige Serienfertigung der Vorrichtung ermöglicht wird.

Diese Aufgaben werden durch eine Vorrichtung mit den Merkmalen des Anspruchs 1 bzw. mit einer Weiterbildung dieser Vorrichtung gelöst.

## Vorteile der Erfindung

Neben einem verringerten Schaltungsaufwand weist die erfindungsgemäße Vorrichtung den Vorteil auf, daß die Widerstandserfassungsanordnung in großem Maße frei dimensionierbar ist. In Verbindung mit einer kurzen Einschwingzeit bei Durchflußänderungen weist die erfindungsgemäße Vorrichtung ein wesentlich verbessertes Einschaltverhalten auf. Darüber hinaus hat es sich insbesondere als vorteilhaft erwiesen, die Ausgangsgröße der Regelschaltung als Meßgröße für den Durchfluß zu verwenden, wobei eine spezielle Art der Kompensation des Einflusses der Temperatur des Durchflußmediums auf den Meßwert sich durch besonders gute Ergebnisse auszeichnet. Insbesondere die Möglichkeit, die zur Kompensation erforderliche Widerstandsschicht in der gleichen Technologie wie die erste und zweite leitfähige Schicht zu fertigen, weist bezüglich der in einer Serienproduktion zulässigen Fehlertoleranzen große Vorteile auf.

Weitere Vorteile der Erfindung ergeben sich aus der nachfolgenden Beschreibung der Ausführungsbeispiele in Verbindung mit den abhängigen Ansprüchen.

## Zeichnung

Ausführungsbeispiele der Erfindung sind in der Zeichnung dargestellt und in der nachfolgenden Beschreibung näher erläutert. Es zeigen Figur 1 ein Schaltbild der erfindungsgemäßen Vorrichtung, Figur 2 eine Prinzipdarstellung einer zweiten Ausführungsform der Anordnung der leitfähigen Schichten zueinander, Figur 3 ein Ausführungsbeispiel zur Veranschaulichung der geometrischen Anordnung der leitfähigen Schichten auf dem Substrat und Figur 4 ein Ausführungsbeispiel der Anordnung der Substrate von drei leitfähigen Schichten im Fluid.

## Beschreibung des Ausführungsbeispiels

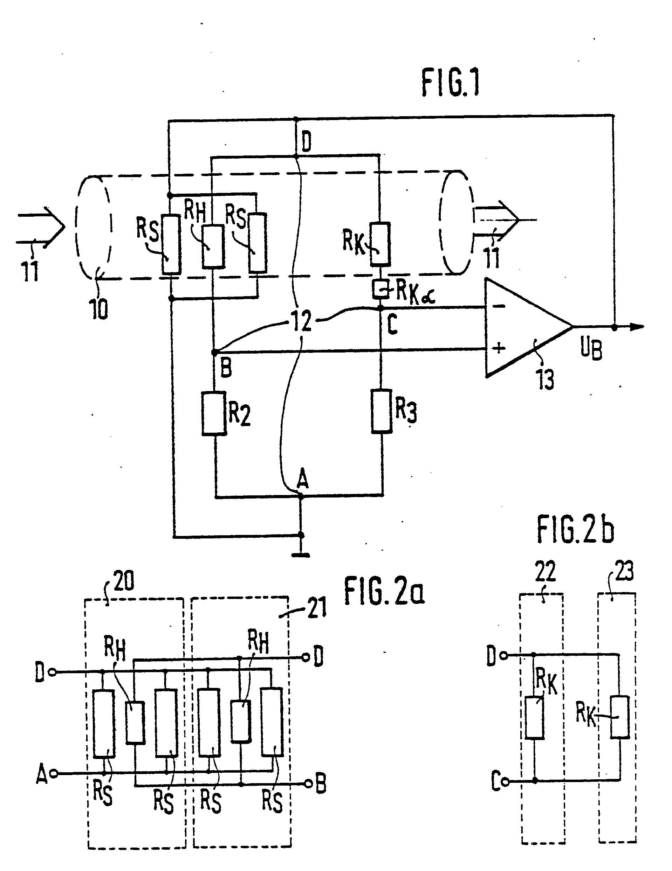

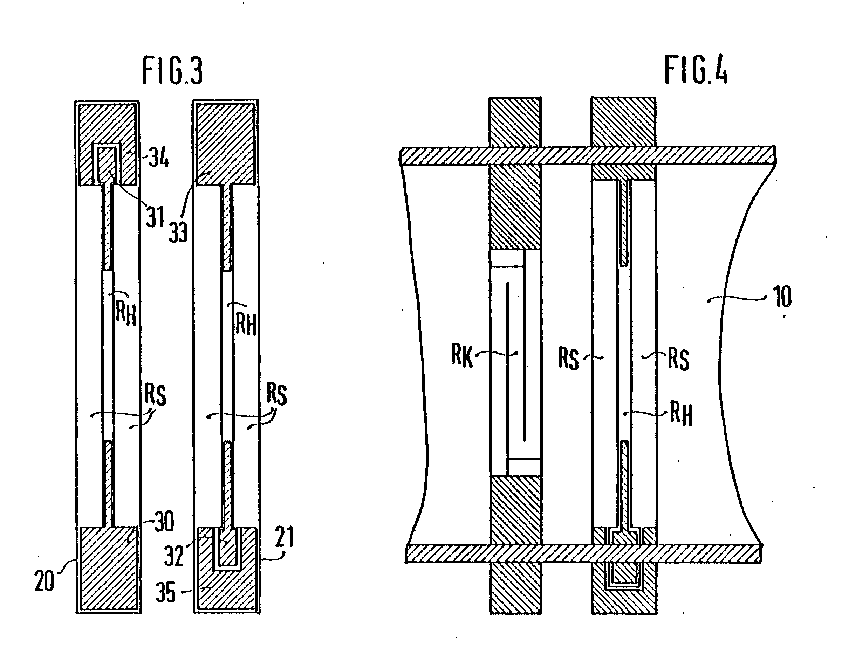

In Figur 1 ist mit der Bezugsziffer 10 ein von einem Fluid durchströmtes Rohr bezeichnet, wobei die Strömungsrichtung des Mediums mit Pfeilen 11 gekennzeichnet wird. Im allgemeinen ist es jedoch für die Erläuterung der Funktionsweise der erfindungsgemäßen Vorrichtung gleichgültig, wie die Strömungsrichtung definiert ist. In das strömende Medium ist ein Widerstand $R_H$ eingebracht, der vorzugsweise einen positiven Temperaturkoeffizienten aufweist und zur Erfassung der Durchflußmenge durch das Rohr 10 dient. Dieser Widerstand $R_H$ ist als Schichtwiderstand oder Filmwiderstand auf einem in Figur 1 nicht dargestellten Substrat ausgebildet und Bestandteil einer im vorliegenden Ausführungsbeispiel als Brückenschaltung ausgebildeten Widerstandserfassungsanordnung 12. Diese Widerstandserfassungsanordnung 12 wird ergänzt durch die Widerstände $R_K$, $R_2$ und $R_3$. Ausgehend vom Fußpunkt A dieser Widerstandsmeßbrücke sind in jeweils einem Brückenzweig die Widerstände $R_2$, $R_H$ sowie $R_3$ und $R_K$ in Serie geschaltet und die Anschlußleitungen der Widerstände $R_H$ und $R_K$ un Punkt D zusammengeführt. Einem Regelverstärker 13 werden die Signale vom Punkt B als Verbindungspunkt der Widerstände $R_2$ und $R_H$ sowie vom Punkt C als Verbindungspunkt der Widerstände $R_3$ und $R_K$ zugeführt. Im bevorzugten Ausführungsbeispiel der Figur 1 ist der Regelverstärker 13 als Differenzverstärker ausgebildet, wobei die Erfindung jedoch nicht auf derartige Differenzverstärker beschränkt ist sondern im allgemeinen auf jede analoge und digitale Regelschaltung anwendbar. ist.

Die Ausgangsgröße der Regelschaltung wird zum Punkt D der Widerstandserfassungsanordnung zurückgeführt, so daß insgesamt eine geschlossene Schleife entsteht. Die Widerstandswerte der Widerstände der Widerstandserfassungsanordnung 12 werden im allgemeinen derart gewählt, daß die Widerstände $R_K$, $R_3$ wesentlich höhere Werte als die Widerstände $R_H$, $R_2$ annehmen. Die Erfindung ist jedoch nicht von dieser speziellen Widerstandswahl abhängig und kann auch für andere Kombinationen eingesetzt werden.

Es soll betont werden, daß die Widerstandserfassungsanordnung 12 nicht nur — wie im Ausführungsbeispiel — durch eine Brückenschaltung sondern auch durch andere Widerstandsmeßschaltungen realisiert werden kann. Die Erfindung ist daher nicht auf Brückenschaltungen beschränkt, sondern bezieht sich auch auf insbesondere brückenähnliche Meßschaltungen, wie sie beispielsweise in der US-PS 42 97 881 offenbart sind.

Die prinzipielle Wirkungsweise dieser Anordnung ist wie folgt:

Durch den Ausgangsstrom des Regelverstärkers 13 erfolgt eine Aufheizung des Widerstandes $R_H$, wobei die Temperatur dieses Widerstandes im wesentlichen durch die Verhältnisse der Brückenwiderstände gegeben ist. Über die geschlossene Schleife wird die vom Widerstand $R_H$ abfließende Wärmemenge stets durch Änderung des zufließenden Stroms kompensiert, so daß der Widerstand $R_H$ auf einer bestimmten Temperatur bzw. auf einem bestimmten Widerstandswert gehalten wird. Der Heizstrom, die Heizleistung oder auch die Ausgangsspannung des Regelverstärkers 13 sind ein Maß für die Durchflußmasse des strömenden Mediums.

Da eine schwankende Temperatur des Strömungsmediums während einer Messung auch die Temperatur bzw. den Widerstandswert des Widerstandes $R_H$ beeinflußt, wird der Widerstand $R_K$ ebenfalls dem strömenden Medium ausgesetzt, um diesen Effekt der Temperaturschwankungen des Mediums auf die Messung des Massendurchsatzes zu kompensieren. Auch dieser Widerstand $R_K$ ist bevorzugt als Film- bzw. Schichtwiderstand, beispielsweise aufgedampft auf ein Substrat, ausgebildet. Damit dieser Widerstand $R_K$ seinen Zweck als Temperaturkompensationswiderstand erfüllt, ist es erforderlich, daß die Temperaturkoeffizienten $\alpha_K$ von $R_K$ und $\alpha_H$ von $R_H$ je nach Auswerteverfahren zur Erfassung der Signalgröße in einer vorgegebenen Beziehung zueinander stehen.

Dadurch, daß der Widerstand $R_H$ bevorzugt als Filmwiderstand ausgebildet ist, ergeben sich gegenüber einem Drahtwiderstand folgende Verbesserungen:

a) kostengünstige Herstellung durch Wegfall einer Ausglüheinrichtung (Verschmutzungsproblem) und durch Integration von wenigstens von $R_H$, $R_K$ in einer Technologie auf dem Substrat,

b) Verbesserung der mechanischen Festigkeit, dadurch Erhöhung der Betriebstemperatur möglich und Verschmutzungsproblem besser lösbar,

c) dabei liegen wie beim Hitzdraht die sehr schnellen Ansprechzeiten in der Größenordnung einer Millisekunde (Durchflußpulsationen unproblematisch) und es ist eine

d) kurze Ansprechzeit bei Änderungen der Lufttemperatur gegeben.

Allerdings sind zur Vermeidung von starken Änderungen des Temperaturprofils über den räumlichen Bereich des Widerstandes $R_H$ gesonderte Maßnahmen notwendig, um die Einschwingzeit bei Durchflußänderungen zu optimieren.

Wie theoretische und experimentelle Untersuchungen gezeigt haben, eignet sich hierzu insbesondere eine Schutzheizung des Widerstandes $R_H$, durch die die nähere Umgebung des Widerstandes $R_H$ bzw. bei der flächenförmigen Ausdehnung von $R_H$ die Ränder ebenfalls auf der jeweiligen, durch die momentane Strömungsgeschwindigkeit und Temperatur des zu messenden Mediums bestimmten Übertemperatur gehalten werden. Bekannte Vorrichtungen verwenden für diese Schutzheizung einen zweiten, getrennten Regelkreis. Dies bedeutet einen wesentlich erhöhten Schaltungsaufwand sowie eine sehr problematische Abstimmung der thermischen und elektrischen Zeitkonstanten der beiden Systeme.

Im vorliegenden Ausführungsbeispiel der erfindungsgemäßen Vorrichtung sind zwei Schutzheizwiderstände $R_S$ vorgesehen, die auf dem gleichen Substrat wie der Widerstand $R_H$ angebracht sind und diesen einrahmen. Diese Widerstände $R_S$ der Schutzheizung lassen sich bevorzugt in der Technologie der Widerstände $R_H$ sowie $R_K$ herstellen und weisen ebenfalls den gleichen Flächen widerstand auf. Beaufschlagt werden sie von der Ausgangsgröße des Regelverstärkers 13 und laufen also gesteuert mit einem bestimmten, von der Temperatur des Widerstandes $R_H$ abhängigen Temperaturwert mit. Damit die Temperaturen der Widerstände $R_S$ mit der Temperatur des Widerstandes $R_H$ übereinstimmen, ist aufgrund des identischen Flächenwiderstandes dieser Widerstände jedoch für eine geeignete Geometrie der Widerstände zu sorgen.

Es kann gezeigt werden, daß die Temperatur von aufgeheizten Filmwiderständen durch den Spannungsabfall pro Längeneinheit des Filmwiderstandes bestimmt wird. Die Filmwiderstände sind daher so auszulegen, daß das Längenverhältnis $l_H/l_S$ der Widerstände $R_S$ und $R_H$ den Wert aufweist, der im abgeglichenen Zustand der Brücke durch das Widerstandsverhältnis $R_H/(R_H + R_2)$ gegeben ist. Für eine derartige Dimensionierung der Filmwiderstände kann davon ausgegangen werden, daß sich die Widerstände $R_S$ der Schutzheizung zumindest annähernd auf dem gleichen Temperaturniveau wie der Widerstand $R_H$ befinden.

Ein weiterer Vorteil dieser Anordnung resultiert aus der Tatsache, daß ein Großteil der erforderlichen Heizleistung aus dem Brückenzweig mit den Widerständen $R_H$, $R_2$ herausgenommen und den Schutzheizwiderständen $R_S$ zugeführt werden. Die am Widerstand $R_2$ auftretende Verlustleistung kann somit verringert werden. Eine weitere Maßnahme, nämlich die Verwendung der Ausgangsspannung des Regelverstärkers 13 als Meßgröße, erweist sich bei Änderungen der Lufttemperatur ebenfalls als positiv für die Leistungsbilanz der Gesamtanordnung. Darüber hinaus weist die Meßgröße $U_B$ einen hohen Signalhub auf, was der Genauigkeit der weiteren Meßdatenverarbeitung zugute kommt.

Wie schon weiter oben angesprochen, ist für eine Kompensation des Einflusses der Fluidtemperatur je nach Wahl der Auswertegröße ein spezieller Temperatur-Koeffizient des Widerstandes $R_K$ in Relation zum Temperatur-Koeffizienten des Widerstandes $R_H$ einzustellen. Unter vereinfachenden Annahmen läßt sich für den Temperatur-Koeffizienten $\alpha_K$ in Abhängigkeit vom Temperatur-Koeffizienten $\alpha_H$ des Widerstandes $R_H$ folgender Wert angeben

$$\alpha_K = \frac{\alpha_H}{1 + 2\,\beta \cdot \alpha_H \cdot \Delta T_0}.$$

mit dem Brückenverhältnis $\beta = R_H/(R_2 + R_H)$, $\Delta T_0 = $ Übertemperatur des Widerstandes $R_H$.

Berücksichtigt man zusätzliche eine Temperaturabhängigkeit der zunächst als konstant angenommenen Wärmeübertragungskoeffizienten der bekannten Kingschen Gleichung für den Heißfilm, so ergeben sich für $\alpha_K$ « tatsächliche » Werte, die um etwa 10 % bis 20 % niedriger liegen.

Der Temperaturkoeffizient $\alpha_K$ wird durch die Einfügung eines Widerstandes $R_{K\alpha}$ zwischen den Punkten C und D der Widerstandserfassungsschaltung eingestellt. Der Temperaturkoeffizient $\alpha_{K\alpha}$ des Widerstandes $R_{K\alpha}$ nimmt näherungsweise den Wert $\alpha_{K\alpha} \simeq 0$ an, während $\alpha_H = \alpha_K \neq 0$ ist, so daß durch eine geeignete Kombination von $R_K$ und $R_{K\alpha}$ der Zusammenhang zwischen $\alpha_K$ und $\alpha_H$ gemäß den erwähnten Forderungen realisierbar ist. Dabei ist $R_{K\alpha}$ bevorzugt nicht dem strömenden Medium ausgesetzt.

Aufgrund dieser speziellen Kompensation ergibt sich noch ein weiterer Vorteil der Vorrichtung, nämlich daß die Temperatur des Filmwiderstandes $R_H$ einen geringen Hub als Funktion der Fluidtemperatur aufweist. Diese Tatsache erweist sich als besonders vorteilhaft bei der Auslegung der Lötanschlüsse der Leitungen die von den Filmwiderständen wegführen. Insbesondere bei sehr hohen Fluidtemperaturen läßt sich hierdurch die thermische Belastung dieses Anschlüsse verringern bzw. ist es möglich, in verschiedenen Anwendungsfällen die Anschlüsse durch Weichlöten herzustellen. Darüber hinaus wird die Verschmutzungsgefahr bei niedrigen Fluidtemperaturen verringert.

In Figur 2 ist eine bevorzugte Ausführungsform der Filmwiderstände $R_H$, $R_S$ sowie $R_K$ dargestellt. Jeder dieser Widerstände wurde in jeweils zwei Widerstände aufgeteilt. Durch diese Maßnahme lassen sich insbesondere die Widerstände $R_H$ und $R_S$ auf beiden Seiten des Substrats anbringen, so daß eine wesentlich homogenere Temperaturverteilung der Temperaturen des Widerstandes $R_H$ gewährleistet ist.

In Figur 2a ist die Unterseite des Substrats mit 20 und die Oberseite mit 21 gekennzeichnet. Die Teilwiderstände $R_H$ sind in der Mitte auf der Unterseite 20 und Oberseite 21 in Parallelschaltung angeordnet. Die Widerstände $R_S$, die zur Schutzheizung der Widerstände $R_H$ dienen, umschließen jeweils paarweise den Widerstand $R_H$ auf der Unterseite 20 und Oberseite 21 des Substrats. Auch die Schutzheizwiderstände $R_S$ sind im vorliegenden Ausführungsbeispiel parallel geschaltet. Die Kennzeichnung der Anschlußpunkte bezieht sich auf das Ausführungsbeispiel der Figur 1.

Es hat sich als vorteilhaft erwiesen, auch den Widerstand $R_K$ zur Kompensation der schwankenden Fluidtemperatur auf der Unterseite 22 und Oberseite 23 eines weiteren Substrats anzubringen. Im Ausführungsbeispiel der Figur 2b sind die beiden Widerstände $R_K$ in Parallelschaltung geschaltet, obwohl sich für verschiedene Anwendungen im Einzelfall auch eine Serienschaltung dieser Widerstände $R_K$ anbieten würde.

Für eine derartige Anordnung sprechen zwei Gründe, nämlich zum einen die Tatsache, daß bei der Herstellung der Filmwiderstände wesentlich geringere Toleranzen eingehalten werden können. In der Praxis hat sich nämlich gezeigt, daß die Dicke der Filmwiderstände und damit ihre spezifischen elektrischen Eigenschaften durch verschiedene Aufdampfraten auf der Substratunter- bzw. Substratoberseite unterschiedliche Werte zueinander annehmen können. Durch die Aufteilung des Widerstandes $R_H$ und $R_K$ auf die Substratunter- bzw. -oberseite können alle Filmwiderstände in einem einzigen Vorgang unter gleichen Bedingungen hergestellt werden, so daß sich Unterschiede der Eigenschaften bezüglich Substratunter- und -oberseite in allen Widerständen gleich auswirken und damit herausfallen. Der andere Vorteil dieser Anordnung kommt dann zum Tragen, wenn auch der Widerstand $R_K$ aufgrund seiner Dimensionierung in gewissem Maße aufgeheizt wird. Auch dann ist durch die beiderseitige Anordnung des Widerstandes $R_K$ auf dem Substrat eine homogenere Temperaturverteilung über den Filmwiderstand gewährleistet. Ein Aufheizen des Widerstandes $R_K$ hat u. U. gewisse Vorteile, falls die Anordnung auf

4

besonders kleine Ansprechzeiten bezüglich Änderungen der Fluidtemperatur getrimmt werden soll.

In Figur 3 ist eine Detaildarstellung des Ausführungsbeispiels der Figur 2a wiedergegeben. Wie in Figur 2a ist mit 20 die Unterseite und mit 21 die Oberseite des Substrats gekennzeichnet. Die Abmessungen des Substrats liegen etwa bei einer Breite von 4 mm und einer Länge von etwa 25 mm. Die Beschichtung der Ober- und Unterseite des Substrats ist symmetrisch ausgebildet, wobei der Widerstand $R_H$ mit einer Länge von ca. 10 mm und einer Breite von ca. 0,5 bis 2 mm in der Mitte angeordnet ist. Die Widerstände $R_S$ sind beiderseits von Widerstand $R_H$ aufgedampft und weisen eine Breite von etwa 1,5 mm und im vorliegenden Ausführungsbeispiel eine Länge von ca. 20 mm auf. Es ist jedoch zu beachten, daß das Längenverhältnis der Filmwiderstände $R_H$ und $R_S$ von Widerstandsverhältnis der Brückenwiderstände $R_H$ zu $R_2$ abhängt. Die absolute Länge bestimmt sich aus der erforderlichen zur Messung ausgenutzten Länge von $R_H$, die unter anderem von den Strömungsverhältnissen am Meßort abhängt. Der vorliegende Fall bezieht sich auf eine symmetrische Brückenanordnung. Die schraffierten Flächen kennzeichnen die niederohmigen Leiterbahnen, wobei mit 30, 31, 32, 33 die Leiterbahnen für die Anschlüsse bezüglich des Widerstandes $R_H$ bezeichnet sind. Dagegen sind die für die Widerstände $R_S$ benötigten Leiterbahnen durch die Bezugsziffern 34 und 35 gekennzeichnet. Die Anschlüsse 30 und 33 sind für $R_S$ und $R_H$ identisch und entsprechend dem Punkt D in Figur 1. Der Flächenwiderstand $R_\square$ liegt im Bereich $0.25 \leqq R_\square \leqq 2.0$ Ohm, während die niederohmigen Leiterbahn einen Flächenwiderstand $R_\square$ im Bereich $R_\square = 0.025$ Ohm aufweist.

In Figur 4 ist die Anordnung der Substrate mit den aufgebrachten Filmwiderständen in dem im Längsschnitt dargestellten Rohr 10 dargestellt. Die beiden Substrate mit dem Filmwiderstand $R_K$ bzw. den Filmwiderständen $R_H$, $R_S$ sind vorzugsweise derart in bezug auf die Strömungsrichtung des Fluids ausgerichtet, daß die Flächennormale einen rechten Winkel mit dem Geschwindigkeitsvektor der Strömung des Fluids bildet. Hierdurch ist gewährleistet, daß die verschmutzungsempfindlichen Zonen (der Filmwiderstand $R_H$) nicht dem direkten Einfluß von Schmutzpartikeln ausgesetzt werden. Langzeitdriften, wie sie bei bekannten Drahtwiderständen auftreten, werden hierdurch vermieden und auch die Probleme bei einem möglicherweise erforderlichen Ausglühen der Widerstände reduziert. Darüber hinaus ist es auch möglich und in verschiedenen Anwendungsfällen sehr vorteilhaft, daß die Flächennormale einen Winkel $\alpha \neq 90°$ zum Vektor der Strömungsrichtung bildet. Dann werden die Substratunter- bzw. -oberseite je nach Strömungsrichtung verschieden stark angeströmt, so daß eine Richtungserkennung der Strömungsrichtung möglich wird.

Bezüglich der Dimensionierung der Widerstände $R_H$ und $R_2$ hat sich ein Wert $R_H/R_2 = 2$ als vorteilhaft herausgestellt. Gegenüber einer symmetrischen Brücke liegt somit die doppelte Nutzleistung am Widerstand $R_H$ vor, so daß sich bei gleichem Leistungsbedarf wie bei einer symmetrischen Brücke entweder eine doppelte Drahtlänge und damit doppelte zur Messung ausgenutzte Länge oder eine Erhöhung der Übertemperatur um einen Faktor 2 ergibt.

**Patentansprüche**

1. Vorrichtung zur Durchflußmessung eines Fluids (11), insbesondere zur Messung der Ansaugluftmenge von Brennkraftmaschinen, mit wenigstens einer ersten und einer zweiten, auf einem Substrat angebrachten, leitfähigen, miteinander in Wärmekontakt stehenden und in das strömende Fluid (11) eingebrachten Schicht $R_H$, $R_S$, mit einer Widerstandserfassungsanordnung (12), die mit einer Regelschaltung ($U_B$) zu einer geschlossenen Schleife verbunden ist, wobei der Widerstandswert der ersten Schicht $R_H$ durch die Widerstandserfassungsanordnung (12) erfaßt und diese erste Schicht mittels der Regelschaltung ($U_B$) durch Zuführung von Energie, deren Größe von der vorbeiströmenden Luftmenge abhängt, auf eine konstante Temperatur geregelt wird, dadurch gekennzeichnet, daß die zweite Schicht $R_S$ ebenfalls mit der Ausgangsgröße der Regelschaltung ($U_B$) beaufschlagt ist, beide Schichten $R_H$, $R_S$ wenigstens annähernd den gleichen Flächenwiderstand aufweisen und in ihrer Geometrie derart aufeinander abgestimmt sind, daß die zweite Schicht $R_S$ auf eine Temperatur gesteuert wird, die wenigstens annähernd mit der konstanten Temperatur der ersten Schicht $R_H$ übereinstimmt.

2. Vorrichtung nach Anspruch 1, dadurch gekennzeichnet, daß die erste und zweite Schicht $R_H$, $R_S$ in ihrer Längsausdehnung (I) derart dimensioniert sind, daß der an ihnen auftretende Spannungsabfall pro Längeneinheit (U/I) wenigstens annähernd gleiche Werte annimmt.

3. Vorrichtung nach Anspruch 1 oder 2, dadurch gekennzeichnet, daß die Widerstandserfassungsanordnung (12) zusammen mit der ersten Schicht $R_H$ eine Brückenschaltung bildet.

4. Vorrichtung nach einem der vorhergehenden Ansprüche, dadurch gekennzeichnet, daß eine dritte auf einem Substrat angebrachte, leitfähige, in das strömende Medium eingebrachte Schicht $R_K$ Bestandteil der Widerstandserfassungsanordnung (12) ist.

5. Vorrichtung nach Anspruch 4, dadurch gekennzeichnet, daß die dritte Schicht $R_K$ wenigstens annähernd den gleichen Flächenwiderstand aufweist wie die erste und die zweite Schicht $R_H$, $R_S$.

6. Vorrichtung nach einem der vorhergehenden Ansprüche, dadurch gekennzeichnet, daß der Temperaturkoeffizient der dritten Schicht $R_K$ in einem vorgegebenen Verhältnis zum Temperaturkoeffizienten der ersten Schicht $R_H$ steht.

7. Vorrichtung nach einem der Ansprüche 4 bis 6 dadurch gekennzeichnet, daß durch Parallel- oder Serienschaltung eines zusätzlichen, einen Temperaturkoeffizienten $\alpha_{K\alpha} = 0$ aufweisenden Widerstandes $R_{K\alpha}$ zu der dritten Schicht $R_K$ der Temperaturkoeffizient des wirksamen Gesamtwiderstandes in einem vorgegebenen Verhältnis zum Temperaturkoeffizienten der ersten Schicht $R_H$ steht.

8. Vorrichtung nach Anspruch 7, dadurch. gekennzeichnet, daß der Temperaturkoeffizient $\alpha_K$ des wirksamen Gesamtwiderstandes auf den Wert

$$\alpha_K = \frac{\alpha_H}{1 + 2\beta \cdot \alpha_H \cdot \Delta T_0}$$

mit $\alpha_H$ = Temperaturkoeffizient der ersten Schicht, $\beta$ = Brückenverhältnis $R_H/(R_2 + R_H)$, $\Delta T_0$ = Übertemperatur des Widerstandes $R_H$, multipliziert mit einem Korrekturfaktor 0,8 bis 0,9, eingestellt wird.

9. Vorrichtung nach einem der Ansprüche 3 bis 8, dadurch gekennzeichnet, daß die beiden Brückenvergleichswiderstände $R_2$, $R_3$ wenigstens näherungsweise den Temperaturkoeffizienten $\alpha_{2,3} = 0$ aufweisen.

10. Vorrichtung nach einem der vorhergehenden Ansprüche, dadurch gekennzeichnet, daß die erste Schicht $R_H$ in der Mitte des Substrats angebracht ist und die zweite Schicht $R_S$ als je ein paralleler Streifen beidseitig neben der ersten Schicht $R_H$ auf dem Substrat angeordnet ist.

11. Vorrichtung nach einem der vorhergehenden Ansprüche, dadurch gekennzeichnet, daß die erste Schicht $R_H$ auf der Unter- (20) und Oberseite (21) des Substrats in zwei Teilen angebracht ist und jeder Teil der ersten Schicht $R_H$ von zwei Teilen der zweiten Schicht $R_S$ eingerahmt ist.

12. Vorrichtung nach einem der Ansprüche 4 bis 11, dadurch gekennzeichnet, daß die dritte Schicht $R_K$ auf der Unter- (22) und Oberseite (23) eines Substrats aufgebracht ist.

13. Vorrichtung nach einem der vorhergehenden Ansprüche, dadurch gekennzeichnet, daß die Regelschaltung als Differenzverstärker (13) ausgebildet ist.

14. Vorrichtung nach Anspruch 13, dadurch gekennzeichnet, daß dem Differenzverstärker (13) eine der Brückendiagonalspannungen ($U_{BC}$) eingangsseitig zugeführt wird und daß der Ausgang des Differenzverstärkers (13) mit der Brückenschaltung an einem zur zweiten Brückendiagonale gehörenden Punkt (D) verbunden ist.

15. Vorrichtung nach Anspruch 13 oder 14, dadurch gekennzeichnet, daß die zweite Schicht $R_S$ zwischen den Ausgang des Regelverstärkers (13) und Masse geschaltet ist.

16. Vorrichtung nach einem der vorhergehenden Ansprüche, dadurch gekennzeichnet, daß das die erste und die zweite Schicht $R_H$, $R_S$ tragende Substrat mit seiner Flächennormalen senkrecht zur Strömungsrichtung des Fluids angeordnet ist.

17. Vorrichtung nach einem der Ansprüche 4 bis 16, dadurch gekennzeichnet, daß das die dritte Schicht $R_K$ tragende Substrat bezüglich der Strömungsrichtung des Fluids vor dem die erste und die zweite Schicht $R_H$, $R_S$ tragenden Substrat angeordnet ist.

18. Vorrichtung nach einem der vorhergehenden Ansprüche, dadurch gekennzeichnet, daß die erste und die zweite Schicht $R_H$, $R_S$ den gleichen Flächenwiderstand aufweisen.

## Claims

1. Device for measuring the flow of a fluid (11), particularly for measuring the intake air volume of internal combustion engines, having at least a first and a second conductive layer $R_H$, $R_S$ applied to a substrate, in thermal contact with one another and inserted into the flowing fluid (11), with a resistance detection arrangement (12) which is connected to a regulating circuit ($U_B$) to form a closed loop, in which arrangement the resistance value of the first layer $R_H$ is detected by the resistance detection arrangement (12) and this first layer is regulated to a constant temperature by means of the regulating circuit ($U_B$) by supplying energy, the magnitude of which depends on the air volume flowing past, characterised in that the second layer $R_S$ is also supplied with the output variable of the regulating circuit ($U_B$), both layers $R_H$, $R_S$ exhibit at least approximately the same resistance per unit area and are matched in their geometry in such a manner that the second layer $R_S$ is controlled to a temperature which at least approximately corresponds to the constant temperature of the first layer $R_H$.

2. Device according to claim 1, characterised in that the first and second layer $R_H$, $R_S$ are dimensioned in their longitudinal extent (L) in such a manner that the voltage drop per unit layer (U/L) occurring across them assumes at least approximately equal values.

3. Device according to claim 1 or 2, characterised in that the resistance detection arrangement (12), together with the first layer $R_H$, forms a bridge circuit.

4. Device according to one of the preceding claims, characterised in that a third conductive layer $R_K$, applied to a substrate and inserted into the flowing medium, is a component part of the resistance detection arrangement (12).

5. Device according to claim 4, characterised in that the third layer $R_K$ exhibits at least approximately the same resistance per unit area as the first and the second layer $R_H$, $R_S$.

6. Device according to one of the preceding claims, characterised in that the temperature coefficient

6

of the third layer $R_K$ is at a predetermined ratio with respect to the temperature coefficient of the first layer $R_H$.

7. Device according to one of claims 4 to 6, characterised in that, by connecting an additional resistance $R_{K\alpha}$ exhibiting a temperature coefficient $\alpha_{K\alpha} \simeq O$ in parallel or series with the third layer $R_K$, the temperature coefficient of the effective total resistance is at a predetermined ratio with respect to the temperature coefficient of the first layer $R_H$.

8. Device according to claim 7, characterised in that the temperature coefficient $\alpha_K$ of the effective total resistance is set to the value

$$\alpha_K = \frac{\alpha_H}{1 + 2\,\beta \cdot \alpha_H \cdot \Delta T_0}$$

where $\alpha_H$ = temperature coefficient of the first layer, $\beta$ = bridge ratio $R_H/(R_2 + R_H)$, $\Delta T_0$ = overtemperature of the resistance $R_H$, multiplied by a correction factor of 0.8 to 0.9.

9. Device according to one of claims 3 to 8, characterised in that the two bridge reference resistances $R_2$, $R_3$ exhibit at least approximately the temperature coefficient $\alpha_{2,3} = 0$.

10. Device according to one of the preceding claims, characterised in that the first layer $R_H$ is applied in the centre of the substrate and the second layer $R_S$ is arranged as one parallel strip each on both sides adjacently to the first layer $R_H$ on the substrate.

11. Device according to one of the preceding claims, characterised in that the first layer $R_H$ is applied in two parts on the underside (20) and top (21) of the substrate and each part of the first layer $R_H$ is framed by two parts of the second layer $R_S$.

12. Device according to one of claims 4 to 11, characterised in that the third layer $R_K$ is applied to the underside (22) and top (23) of a substrate.

13. Device according to one of the preceding claims, characterised in that the regulating circuit is constructed as differential amplifier (13).

14. Device according to claim 13, characterised in that the input of the differential amplifier (13) is supplied with one of the bridge diagonal voltages ($U_{BC}$) and that the output of differential amplifier (13) is connected to the bridge circuit at a point (D) belonging to the second bridge diagonal.

15. Device according to claim 13 or 14, characterised in that the second layer $R_S$ is connected between the output of the regulating amplifier (13) and earth.

16. Device according to one of the preceding claims, characterised in that the substrate carrying the first and the second layer $R_H$, $R_S$ is arranged with its surface normal perpendicular to the flow direction of the fluid.

17. Device according to one of claims 4 to 16, characterised in that the substrate carrying the third layer $R_K$ is arranged in front of the substrate carrying the first and the second layer $R_H$, $R_S$ with respect to the flow direction of the fluid.

18. Device according to one of the preceding claims, characterised in that the first and the second layer $R_H$, $R_S$ exhibit the same resistance per unit area.

## Revendications

1. Dispositif pour mesurer le débit d'un fluide (11), notamment pour mesurer la quantité d'air aspirée par des moteurs à combustion interne, dispositif comportant au moins une première et une seconde couches conductrices ($R_H$, $R_S$) rapportées sur un substrat, ces couches étant en contact thermique entre elles et étant insérées dans le fluide en écoulement (11), un dispositif de détection de résistances (12) étant prévu, ce dispositif étant relié à un circuit de réglage ($U_B$) pour constituer une boucle fermée, la valeur de la résistance de la première couche ($R_H$) étant détectée par le dispositif de détection de résistance (12) et cette première couche étant réglée à une température constante au moyen du circuit de réglage ($U_B$) par un apport d'énergie dont l'importance dépend de la quantité d'air s'écoulant le long de cette couche, dispositif caractérisé en ce que la seconde couche ($R_S$) est également alimentée par la grandeur de sortie du circuit de réglage ($U_B$), les deux couches ($R_H$, $R_S$) ayant au moins approximativement la même résistance superficielle et leur géométrie étant accordée l'une à l'autre de façon que la seconde couche ($R_S$) soit commandée à une température qui coïncide au moins approximativement avec la température constante de la première couche ($R_H$).

2. Dispositif selon la revendication 1, caractérisé en ce que la première et la seconde couches ($R_H$, $R_S$) sont dimensionnées dans leur extension longitudinale (1) de façon que les chutes de tension par unité de longueur ($U/l$) se produisant sur elles prennent au moins approximativement les mêmes valeurs.

3. Dispositif selon la revendication 1 ou 2, caractérisé en ce que le dispositif de détection de résistance (12) constitue en commun avec la première couche ($R_H$) un branchement en pont.

4. Dispositif selon une des précédentes revendications, caractérisé en ce qu'une troisième couche conductrice ($R_K$) rapportée sur un substrat et insérée dans le fluide en écoulement, est une partie constitutive du dispositif de détection de résistances (12).

5. Dispositif selon la revendication 4, caractérisé en ce que la troisième couche ($R_K$) a approximativement la même résistance superficielle que la première et la seconde couches ($R_H$, $R_S$).

6. Dispositif selon une des précédentes revendications, caractérisé en ce que le coefficient de température de la troisième couche ($R_K$) est dans un rapport prédéfini par rapport au coefficient de température de la première couche ($R_H$).

7. Dispositif selon une des revendications 4 à 6, caractérisé en ce que par branchement en parallèle ou en série d'une résistance ($R_K\alpha$) supplémentaire à la troisième couche ($R_K$), et ayant un coefficient de température $\alpha_K\alpha = O$, le coefficient de température de la résistance totale est dans un rapport prédéfini par rapport au coefficient de température de la première couche ($R_H$).

8. Dispositif selon la revendication 7, caractérisé en ce que le coefficient de température ($\alpha_K$) de la résistance totale utile est réglé à la valeur

$$\alpha_K = \frac{\alpha_H}{1 + 2\,\beta \cdot \alpha_H \cdot \Delta T_0}$$

$\alpha_H$ étant le coefficient de température de la première couche, $\beta$ étant le rapport de ponts $R_H/(R_2 + R_H)$, $\Delta T_0$ étant l'échauffement de la résistance $R_H$ multiplié par un facteur de correction de 0,8 à 0,9.

9. Dispositif selon une des revendications 3 à 8, caractérisé en ce que les deux résistances d'équilibrage du pont ($R_2$, $R_3$) ont au moins approximativement des coefficients de température $\alpha_{2,3} = 0$.

10. Dispositif selon une des revendications précédentes, caractérisé en ce que la première couche ($R_H$) est déposée dans le milieu du substrat et la seconde couche ($R_S$) est disposée sur le substrat à côté de la première couche ($R_H$) sous la forme d'une bande parallèle sur chacun des deux côtés de la première couche.

11. Dispositif selon une des précédentes revendications, caractérisé en ce que la première couche ($R_H$) est déposée en deux parties pour l'une sur la face inférieure (20) du substrat et l'autre sur sa face supérieure (21), chacune des parties de la première couche ($R_H$) étant encadrée par deux parties de la seconde couche ($R_S$).

12. Dispositif selon une des revendications 4 à 11, caractérisé en ce que la troisième couche ($R_K$) est déposée d'une part, sur la face inférieure (22) d'un substrat, et, d'autre part, sur sa face supérieure (23).

13. Dispositif selon une des précédentes revendications, caractérisé en ce que le circuit de réglage revêt la forme d'un amplificateur différentiel (13).

14. Dispositif selon la revendication 13, caractérisé en ce qu'une ($U_{BC}$) des tensions diagonales du pont est appliquée côté entrée à l'amplificateur différentiel (13), tandis que la sortie de cet amplificateur différentiel (13) est reliée au circuit de pont en un point (D) appartenant à la seconde diagonale du pont.

15. Dispositif selon la revendication 13 ou 14, caractérisé en ce que la seconde couche ($R_S$) est branchée entre la sortie de l'amplificateur de réglage (13) et la masse.

16. Dispositif selon une des précédentes revendications, caractérisé en ce que la normale a la surface du substrat portant la première couche et la seconde couches ($R_H$, $R_S$) est perpendiculaire à la direction d'écoulement du fluide.

17. Dispositif selon une des revendications 4 à 16, caractérisé en ce que le substrat portant la troisième couche ($R_K$) est disposé par rapport au sens de l'écoulement du fluide en amont du substrat portant la première et la seconde couches ($R_H$, $R_S$).

18. Dispositif selon une des précédentes revendications, caractérisé en ce que la première et la seconde couches ($R_H$, $R_S$) ont la même résistance superficielle.

8

FIG.1

FIG.2b

FIG.2a

FIG.4

10

RS

RH

RS

RK

FIG.3

RH

RS

21

RH

RS

31 33

34

30

32

35

20